(19) Europäisches Patentamt
European Patent Office
Office européen des brevets

(11) Publication number: **0 183 770**
**B1**

(12) # EUROPEAN PATENT SPECIFICATION

(45) Date of publication of patent specification: **23.11.88**

(51) Int. Cl.$^4$: **B 05 D 1/02**

(21) Application number: **85902753.4**

(22) Date of filing: **06.05.85**

(86) International application number:
**PCT/US85/00821**

(87) International publication number:
**WO 85/05292 05.12.85 Gazette 85/26**

(54) **COLOR SUPPRESSING PROCESS.**

(30) Priority: **14.05.84 US 609587**

(43) Date of publication of application:
**11.06.86 Bulletin 86/24**

(45) Publication of the grant of the patent:
**23.11.88 Bulletin 88/47**

(84) Designated Contracting States:
**CH DE LI NL SE**

(56) References cited:
**GB-A-2 150 044**
**US-A-4 160 061**
**US-A-4 391 743**

**CHEMICAL ABSTRACTS, vol. 99, no. 20, 14th November 1983, page 272, abstract no. 162913w, Columbus, Ohio, US; & JP - A - 58 41 724 (NIPPON SODA CO., LTD.) 11-03-1983**

(73) Proprietor: **GORDON, Roy Gerald**
**22 Highland Street**
**Cambridge, MA 02138 (US)**

(72) Inventor: **GORDON, Roy Gerald**
**22 Highland Street**
**Cambridge, MA 02138 (US)**

(74) Representative: **Bankes, Stephen C. D. et al**
**Baron & Warren 18 South End Kensington**
**London W8 5BU (GB)**

**EP 0 183 770 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to the formation of coatings which are useful as iridescence-suppressing coatings on transparent substrates, particularly glass substrates. The iridescence-suppressing coating is normally positioned between a glass substrate and a transparent, functional coating such as a sub-micron-thick layer of a far-infrared-reflecting tin oxide coating.

The background relative to the development and use of iridescence-suppression by use of ultra-thin non-metallic, highly-transparent coatings is set out in US—A—4,187,336; 4,308,316; 4,206,252; and 4,377,613. These patents teach the geometrical and optical considerations relative to selection of iridescence-suppressing coatings. A typical colour-suppression layer as disclosed in these patents, is a transparent layer about 800 angstroms thick, with a refractive index of about 1.67, placed between a glass substrate and an infrared-reflective tin oxide coating. Another pertinent aspect of the teachings of US—A—4,187,336 is the fact that amorphous aluminium oxide coatings are of value as a haze-suppressant when coating on a soda-lime glass substrate and then depositing a tin oxide layer on top of the aluminium oxide. The efficacy of these iridescence-suppressing coatings has made it desirable to seek more rapid coating procedures so that the coatings may be deposited at rates appropriate for commercial glass-making operations and with a few distinct coating zones as is possible.

The aforesaid Gordon patents emphasize, primarily the use of gaseous coating systems. Other work such as that described in US—A—4,147,556 and 3,185,586 have described the spraying of liquid compositions into the glass coating reaction zone. However, thus far no one has suggested a spray system which would be efficacous for the very thin, iridescence-suppressing layers taught by Gordon and could be achieved with such rapidity despite the need to control both thickness and refractive index of the coatings. The evaluation of colour, especially iridescence, is discussed in US—A—4,187,336 and 4,206,252. However, it is also noted that the teaching of MacAdam set forth in Applied Optics, vol. 10, No. 1 (January 1971) are also of value in evaluating small colour differences. The formulae of MacAdam were developed based on the observations made by a number of colour-normal observers and appear to be of value to those interested in minimizing undesirable colour effects in "colourless" glass products.

In the prior art, aluminium oxide films have been chemically deposited from four different classes of aluminium compounds.

1) Trialkyl aluminium compounds primarily trimethyl aluminium vapours, have been reacted with nitrous oxide to form aluminium oxide films, by Hall and Robinette, Journal of Electrochemical Society, Vol. 118, pages 1624—1626 (1971). This method, however, requires critical control of conditions such as concentration and temperature, and also achieves only slow deposition rates, even at such high temperatures, such as 650°C, that soda-lime glass softens.

2) Vapours of aluminium trialkoxides, preferably aluminium tri(isopropoxide), have been used to produce aluminium oxide films. These compounds react at relatively low temperatures, such as 400°C, but the aluminium oxide produced tends to be porous and of low density, and the deposition rates are rather low. Typical references to this art are US Patent 2,989,421 to Novak; and Aboaf, Journal of Electrochemical Society, vol. 114, pages 948—952 (1967).

3) Vapour deposition of aluminium oxide from aluminium chelates, such as aluminium acetylacetonate, has been described in US—A—4,160,061 and US—A—4,187,336. However, the deposition rate achieved by these processes is rather slow, even at rather higher glass temperatures, such as 600°C.

4) Aluminium oxide films have been deposited by the reaction of aluminium chloride vapour with carbon dioxide and hydrogen. References include Colment et al., Journal of Electrochemical Society. vol. 129, pages 1367—72 (1982), and others cited there. This reaction is very slow at temperatures below about 900°C, and therefore cannot be used for coating soda-lime glass, which is very soft at such high temperatures.

From Chemical Abstracts, vol. 99 (1983) No. 20, abstract No. 162813W, a metal compound for coating a glass sheet is known. This compound comprises at least one oxygen-bearing organic chelate ligand and at least one alkoxy ligand, the compound decomposing to leave a thin metal-oxide film formed of a metal and oxygen derived in part from the alkoxy and chelate ligand, the metal being either Al, Ti or Zr. However, the deposition rate achieve by dispersing the compound on a glass sheet at 400°C is also rather slow.

The present invention consists in a process for forming a thin metal oxide coating on glass comprising the steps of spraying a metal compound bearing at least one B-diketonate chelate ligand and at least one alkoxy ligand, onto a hot glass sheet maintained at a temperature of 500—600°C, and decomposing said compound to leave thin amorphous metal oxide film formed of said metal and oxygen derived in part from said alkoxy and B-diketonate ligands at a deposition rate of at least 400 angstroms per second and wherein a major portion of said metal is aluminium.

There is thus provided a safe, rapid, method of making iridescence-suppressing glass coatings.

The invention involves a reaction system which may be readily modified with respect to its stoichiometry and refractive index without any substantial modifying of the basic operating parameters of the apparatus on which the process is carried out.

The metal complexes containing alkoxy and B-diketonate ligands are referred to hereinafter as "alkoxy-chelates".

The metal-bearing alkoxy-chelate reactants can

be carried in a non-flammable, non-toxic, anhydrous, liquid system. The metal atoms of the reactants are oxidized on the glass substrate to form the desired iridescence-suppressing coating. The deposition of the coating composition may be in a wholly oxygen-free atmosphere because the reactants themselves are desirably selected to have an amount of available oxygen which is sufficient to oxidize the metals under the coating conditions.

Consequently, it is within the scope of the invention to provide ultra-thin oxide coatings by reacting mixtures of alkoxy-chelates including another metal or metals besides aluminium to achieve the desired amorphous oxide properties.

Another advantage of the alkoxy-chelates of the invention compared to alkoxy reactants described in the prior art, is their greater resistance to attack by moisture which may inadvertently be present in the reaction zone. Also, the liquid form of the alkoxy-chelates makes it possible for them to be sprayed in relatively concentrated solutions, or even sprayed with little or no dilution, upon the hot glass substrate. Most of the preferred pure alkoxy- or pure chelate material suggested in the prior art were solids which would have to be used in conjunction with a substrantial amount of solvent were they otherwise suitable for use in a spray-type process.

In utilizing the coating process the transparent glass substrate is maintained at 500°C to 600°C. Thus it is particularly valuable to find alkoxy-chelate compounds which do react completely and quickly within this temperature range which is low enought so that the glass will not soften, yet high enough to achieve quick deposition of the desired coating without recondensation, formation of powder deposits and other problems.

An essential reactant in the process of the invention is an aluminium-bearing alkoxy-chelate compound bonding the aluminium atom to one or more alkoxy groups and to one or more beta-diketonate ligands e.g. a material such as aluminium di(isopropoxide) acetoacetic acid ester chelate, i.e.

$$Al[(CH_3)_2\ CHO]_2\ (C_6H_9O_3)$$

This compound is readily soluble in convenient organic solvent systems and decomposes leaving an amorphous aluminium oxide coating at appropriately high temperatures. Alternatively, the pure liquid may be sprayed directly upon the substrate to be coated if suitable spray apparatus is used, which can effectively disperse this viscous liquid.

When the compound is used alone, it will form an excellent haze-suppressing barrier layer on soda glass. In most applications as an iridescence-suppressing coating positioned between a glass substrate and a semiconductor overcoat, another reactant will be added to produce a coprecipitated oxide film having the precise refractive index suitable for the particular application. For example, I have found that the refractive index of aluminium oxide films formed from aluminium di(isopropoxide) acetoacetic acid ester chelate have refractive index below 1.67. Therefore a co-deposited oxide having a refractive index greater than 1.67, such as titanium oxide, is helpful in raising the refractive index to the range required to suppress iridescence of a tin oxide film deposited subsequently.

A coated metal oxide film having a thickness of about 800 angstroms and a refractive index of about 1.67 has been found to be advantageous.

A material particularly useful with the aluminium chelate reactant is the titanium-oxide contributing titanium di(isopropoxide) bis(acetylacetonate) i.e.

$$Ti[(CH_3)_2\ CHO]_2\ (C_5H_7O_2)_2$$

Other compounds that could be used are the analogous zirconium and hafnium compounds.

A single spray head supplied with these alkoxy-chelate reactants can be utilized to process a hot glass substrate at speeds of about 500 inches (12.7 m) per minute or more with a 800 angstrom coating. Such surprisingly high growth rates were not achieved with any of the prior art deposition methods. Deposition rates of at least 400 angstroms per second are obtainable. Coatings will usually be less than 1000 angstroms thick and, typically, will be deposited within about one second.

The invention will be further illustrated by the following examples.

Example 1

A solution is formed by dissolving 275 grams of aluminium di(isopropoxide) acetoacetic acid ester chelate,

$$Al[(CH_3)_2\ CHO]_2\ (C_6H_9O_3),$$

and 91 grams of titanium di(isopropoxide) bis(acetylacetonate),

$$Ti[(CH_3)_2\ CHO]_2\ (C_5H_7O_2)_2$$

in enough dry methylene dichloride, $CH_2Cl_2$, to make 1 litre of solution. Soda-lime glass is heated to 1100°F (593°C) and sprayed with atomized droplets of the spray solution, using a compressed air spray gun with its nozzle placed about 20 cm from the glass surface, and inclined so that the spray hits the glass surface at an angle of about 30 degrees from the horizontal glass surface. The spray is operated for about one second over the area being coated.

The sprayed portion of the glass surface is found to have a clear, transparent coating which is evident to the eye only by its slightly higher reflectivity to visible light. Ellipsometric measurement shows that the surface of the directly sprayed area is covered by a film about 800 angstroms thick, believed to be amorphous, and having a refractive index of about 1.67.

The glass was then coated with an infrared-reflective, electrically-conductive, transparent coating of fluorine-doped tin oxide, as is known in the art, by heating the coated glass to 593°C, and contacting it with a gas mixture containing 1.5% tetramethyltin, 2.0% bromotrifluoromethane, balance dry air, for 10 seconds. The coated sample has a colourless, i.e. iridescence-free, appearance in both reflected and transmitted light. It has a low thermal emiissivity of about 0.1, and a low electrical resistance of about 10 ohms per square.

The aluminium and titanium compounds described above were obtained from ALFA Products, a part of the Ventron Division of Thiokol Corporation under catalogue numbers 89350 and 89360, respectively.

Examples 2 and 3

Example 1 is repeated substituting either hafnium or zirconium for the titanium in the metal chelate. Films of approximately the same quality are achieved as were achieved in Example 1.

**Claims**

1. A process for forming thin metal oxide coating on glass comprising the steps of spraying a metal compound bearing at least one β-diketonate chelate ligand and at least one alkoxy ligand, onto a hot glass sheet maintained at 500 to 600°C and decomposing said compound to leave a thin, amorphous, metal oxide film formed of said metal and oxygen derived in part from said alkoxy and chelate ligands at a deposition rate of at least 400 angstroms per second and wherein a major portion of said metal is aluminium.

2. A process as defined in claim 1, wherein said metal oxide film is formed of mixed aluminium and titanium oxides.

3. A process as defined in claim 1 or 2, wherein said alkoxy-chelate compound is aluminium di(isopropoxide) acetoacetic acid ester chelate.

4. A process as defined in claim 2, wherein aluminium and titanium oxides are residues of the decomposition of a mixture aluminium di(isopropoxide) acetoacetic acid ester chelate and titanium di(isopropoxide) bis(acetylacetonate) chelate.

5. A process as defined in any preceding claim, wherein said film is from 400 to 1000 angstroms thick.

6. A process as defined in claim 5, wherein said proportions of said compounds are selected to yield a film on said glass which film is about 800 angstroms thick and has a refractive index of about 1.67.

7. A process as defined in any preceding claim wherein a layer of a far-infrared-reflecting material is formed over the aluminium oxide-containing layer, the thickness of said layer or reflecting material being less than one micron.

8. A process as defined in claim 7 wherein said infrared-reflective material is tin oxide.

9. A process as defined in any preceding claim wherein the film is deposited at a rate of at least 800 Angstroms per second.

10. A process as defined in any preceding claim wherein the film is deposited at a rate from 400 to 1000 Angstroms per second.

**Patentansprüche**

1. Verfahren zum Ausbilden einer dünnen Metall-Oxid-Schicht auf Glas, gekennzeichnet durch die Verfahrensschritte:

—Aufsprühen einer Metall-Verbindung, enthaltend mindestens eine β-Diketonat-Chelat-Verbindung und mindestens eine Alkoxy-Verbindung, auf eine heiße Glasplatte, die auf einer Temperatur von 500°C bis 600°C gehalten wird, und

—Zerlegen dieser Mischung zwecks Bildung eines dünnen, amorphen Metall-Oxid-Films aus dem genannten Metall und Sauerstoff, welcher teilweise von den besagten Alkoxy- und Chelat-Verbindungen herstammt, bei einer Ablagerungsgeschwindigkeit von mindestens 400 Angström pro Sekunde, und wobei ein bedeutender Teil des erwähnten Metalls Aluminium ist.

2. Verfahren nach Anspruch 1, dadurch gekennzeichnet, daß die Metall-Oxid-Schicht aus einer Mischung von Aluminium- und Titan-Oxiden gebildet wird.

3. Verfahren nach den Ansprüchen 1 oder 2, dadurch gekennzeichnet, daß die Alkoxy-Chelat-Verbindung ein Aluminium - Di(Isopropoxyd) - Azetylessigsäureester-Chelat ist.

4. Verfahren nach Anspruch 2, dadurch gekennzeichnet, daß die Aluminium-und Titan-Oxide Rückstände aus der Zerlegung einer Mischung aus Aluminium-Di(Isopropoxyd) - Azetylessigsäureester-Chelat und Titan-Di(Ispropoxyd)-Bi(Azetyl-Azeton)-Chelat sind.

5. Verfahren nach einem der vorhergehenden Ansprüche, dadurch gekennzeichnet, daß die Dicke des Auflagefilms 400 bis 1000 Angström beträgt.

6. Verfahren nach Anspruch 5, dadurch gekennzeichnet, daß die Anteile der Verbindungen so ausgewählt sind, daß sich auf dem Glas eine Schicht einer Dicke von etwa 800 Angström mit einem Brechungsindex von etwa 1,67 ergibt.

7. Verfahren nach einem der vorhergehenden Ansprüche, dadurch gekennzeichnet, daß eine Schicht eines fernes Infrarotlicht reflektierenden Materials auf den Aluminium-Oxid enthaltenden Belag aufgetragen wird, wobei die Stärke dieser Schicht oder des reflektierenden Materials weniger als ein Mikron beträgt.

8. Verfahren nach Anspruch 7, dadurch gekennzeichnet, daß das Infrarotlicht reflektierende Material Zinn-Oxid ist.

9. Verfahren nach einem der vorhergehenden Ansprüche, dadurch gekennzeichnet, daß die Beschichtungsgeschwindigkeit mindestens 800 Angström pro Sekunde beträgt.

10. Verfahren nach einem der vorhergehenden Ansprüche, dadurch gekennzeichnet, daß die Beschichtungsgeschwindigkeit zwischen 400 und 1000 Angström beträgt.

**Revendications**

1. Procédé pour former un revêtement d'oxyde métallique fin sur du verre comprenant les stades consistant à pulvériser un composé métallique portant au moins un ligand chélate de β-dicétonate et au moins un ligand alcoxy, sur une feuille de verre chaude maintenue à 500 à 600°C et à décomposer ledit composé pour laisser une pellicule fine, amorphe, d'oxyde métallique formée sur ledit métal et de l'oxygène provenant en partie desdits ligand alcoxy et chélate, à une vitesse de dépôt d'au moins 400 angströms par seconde, et dans lequel une proportion prédominante dudit métal est l'aluminium.

2. Procédé selon la revendication 1, dans lequel ladite pellicule d'oxyde métallique est formée d'oxydes d'aluminium et de titane mélangés.

3. Procédé selon la revendication 1 ou 2, dans lequel ledit composé alcoxy-chélate est une chélate de di(isopropylate) acétoacétate d'aluminium.

4. Procédé selon la revendication 2, dans lequel les oxydes d'aluminium et de titane sont des résidus de la décomposition d'un mélange de chélate de di(isopropylate) acétoacétate d'aluminium et de chélate de di(isopropylate) bis(acétylacétonate) de titane.

5. Procédé selon l'une quelconque des revendications précédentes, dans lequel ladite pellicule a une épaisseur de 400 à 1000 angströms.

6. Procédé selon la revendication 5, dans lequel lesdites proportions desdits composés sont choisies pour donner une pellicule sur ledit verre, laquelle pellicule a environ 800 angströms d'épaisseur et un indice de réfraction d'environ 1,67.

7. Procédé selon l'une quelconque des revendications précédentes, dans lequel une couche d'une matière réfléchissant dans l'infrarouge lointain est formée sur la couche contenant de l'oxyde d'aluminium, l'épaisseur de ladite couche de matière réfléchissante étant inférieure à 1 micron.

8. Procédé selon la revendication 7, dans lequel ladite matière réfléchissant dans l'infrarouge est de l'oxyde d'étain.

9. Procédé selon l'une quelconque des revendications précédentes, dans lequel la pellicule est déposée à une vitesse d'au moins 800 angströms par seconde.

10. Procédé selon l'une quelconque des revendications précédentes, dans lequel la pellicule est déposée à une vitesse de 400 à 1000 angströms par seconde.